(19)

**Europäisches Patentamt**
**European Patent Office**
**Office européen des brevets**

(11) **EP 4 331 382 A1**

(12) **EUROPEAN PATENT APPLICATION**
published in accordance with Art. 153(4) EPC

(43) Date of publication:
**06.03.2024 Bulletin 2024/10**

(21) Application number: **22796191.9**

(22) Date of filing: **28.04.2022**

(51) International Patent Classification (IPC):
**A23L 7/196** $^{(2016.01)}$     **A23L 31/00** $^{(2016.01)}$
**A23L 23/00** $^{(2016.01)}$     **A23L 3/16** $^{(2006.01)}$
**A23L 3/10** $^{(2006.01)}$     **A23L 3/02** $^{(2006.01)}$
**B65B 55/14** $^{(2006.01)}$     **B65B 25/00** $^{(2006.01)}$

(52) Cooperative Patent Classification (CPC):
**A23L 3/02; A23L 3/10; A23L 3/16; A23L 7/196;**
**A23L 23/00; A23L 31/00; B65B 25/00; B65B 55/14**

(86) International application number:
**PCT/KR2022/006124**

(87) International publication number:
**WO 2022/231359 (03.11.2022 Gazette 2022/44)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.04.2021 KR 20210056077**

(71) Applicant: **CJ Cheiljedang Corporation**
**Seoul 04560 (KR)**

(72) Inventors:
• **OH, Ye Jin**
**Seoul 04560 (KR)**
• **JANG, Il Sang**
**Seoul 04560 (KR)**

• **KIM, Eun Hye**
**Seoul 04560 (KR)**
• **PARK, Hyeong Seon**
**Seoul 04560 (KR)**
• **JEONG, Hyo Young**
**Seoul 04560 (KR)**
• **CHOI, Hye Mi**
**Seoul 04560 (KR)**
• **JEONG, Sung Yoon**
**Seoul 04560 (KR)**
• **YOON, In Won**
**Seoul 04560 (KR)**

(74) Representative: **Handley, Matthew Edward et al**
**Venner Shipley LLP**
**200 Aldersgate**
**London EC1A 4HD (GB)**

(54) **INSTANT NUTRITIOUS RICE MIXED WITH MUSHROOM HAVING IMPROVED TASTE, NUTRITION, AND TEXTURE**

(57) The present application relates to an instant rice, and more particularly, to a nutritious rice mixed with mushrooms in the form of an instant rice, and the instant rice can exhibit sufficient sterilization effect due to microorganisms lower than a threshold value in the final instant rice, even when the instant rice is prepared using raw ingredients that are susceptible to microbial contamination of are difficult to sterilize, and does not cause the problem of deterioration in rice quality that may occur due to strict sterilization, and thus can exhibit excellent texture and taste.

【Figure 1】

EP 4 331 382 A1

**Description**

[Technical Field]

The present application relates to a nutritious mushroom rice in the form of an instant food.

[Background Art]

Cooked grains (Bap) is a staple food in East Asia including Korea, Japan and China, and is a type of food commonly eaten throughout Asia including Southeast Asia and South Asia. In recent years, the number of people consuming the Bap has increased not only in Asia but also in Western countries, and the Bap has now become a popular food even in Western countries. In particular, rice, a main raw ingredient of the Bap, is becoming more popular as it is known that the rice is nutritionally excellent.

Generally, Bap may be cooked and prepared by washing grains such as rice in water, soaking the grains, then removing water and heating the grains. However, in order to cook rice properly, it is important to accurately measure and use the amount of water according to the amount of grains, and depending on heating conditions and methods, the final taste or texture of Bap may vary greatly, and thus skilled skill or experience is required to make Bap above a certain level. Since it is not easy to cook the consistent and high-quality Bap, electric rice cookers have been developed only for the purpose of cooking Bap. Since the Bap is a type of food eaten as a staple food, the Bap needs to be cooked every day or in large quantities, but has a disadvantage that the cooking process is cumbersome and not easy. In particular, with the recent trend of increasing single-person households and developing dining culture, the number of people who want to cook and eat the Bap at home through the cumbersome process is decreasing, and on the contrary, the demand for an instant rice in the form of instant food is increasing.

The instant rice is sold as cooked rice in a package, and thus there is an advantage that consumers who purchase the instant foo may eat the instant food right away, and easily enjoy high-quality Bap through a simple cooking process using a microwave, etc. However, in instant foods that are distributed for a long period of time and stored at room temperature, there is a high need to control microbial contamination through sufficient sterilization. If excessive sterilization conditions are applied to sterilize instant rice, the quality of Bap may be damaged and deteriorated. Therefore, it is an important problem to solve in the field of instant rice to achieve a sterilization effect while maintaining the quality of Bap.

The solving of the above problems becomes more important in instant rice, which uses more raw ingredients other than white rice even in the instant rice. When using raw ingredients that contain a lot of moisture or are susceptible to microbial contamination, sterilization is difficult and quality deterioration due to sterilization is noticeable, so that the need for sterilization and quality control is particularly emerging. In the case of a mixed rice in the form of the instant rice on the market, since raw ingredients vulnerable to microbial contamination are use, even if the sterilization conditions are satisfied, the quality of Bap is significantly reduced to have poor texture and taste in many cases. Korean Laid-open Patent Publication No. 10-2015-0105819 discloses a method for preparing sterile packaged instant flavored glutinous rice containing nuts, and a method of first cooking flavored glutinous rice by mixing ingredients, and then heating the rice to high temperature to sterilize and package the rice, and thus, it discloses only a method without considering a problem of deterioration of Bap quality due to sterilization at all. Recently, the convenience food market is gradually increasing, and as the demand for various types of the instant food in addition to the existing white rice Bap increases, a demand for the instant food having similar quality to food cooked at home or in restaurants and a need for development thereof are also increasing.

[Prior Art Document]

[Patent Document]

(Patent Document 1) Korean Laid-open Patent Publication No. 10-2015-0105819

[Disclosure]

[Technical Problem]

The present application relates to an instant rice prepared using raw ingredients that are vulnerable to microbial contamination and are difficult to sterilize, and an object of the present application is to provide an instant rice having excellent quality with improved taste, nutrition, texture, etc. of hot pot rice even while containing microorganisms of a threshold value or less through sufficient sterilization.

[Technical Solution]

An aspect of the present application provides an instant rice including a sealed container; and a mushroom rice made from grains and mushrooms contained in the container, wherein the rice in the mushroom rice is included in an amount of 60 parts by weight to 90 parts by weight based on 100 parts by weight of the contents contained in the container, the mushrooms in the mushroom rice are included in an amount of 10 parts by weight to 30 parts by weight based on 100 parts by weight of the contents contained in the container, and the number of microorganisms in the instant rice is negative within a shelf life.

Hereinafter, the present application will be described in detail.

The term "cooked grains (Bap)" used herein refers to all foods prepared by adding water to grains, pressurizing, and heating the grains. When compared to porridge, the Bap is maintained in the form of grains, characterized to be chewed and eaten, and has a feature of having less moisture than porridge. The Bap may be commonly taken as a staple food in East Asia including Korea and Southeast Asia, and mainly prepared using rice, but may be prepared with other grains instead of rice, or prepared by mixing rice with other grains, or may be prepared using additional ingredients other than grains.

The term "instant rice" used herein means Bap made in the form of an instant food. The instant rice is a processed food that is able to be eaten in itself without a separate cooking process, or eaten through a simpler cooking process than a conventional method of preparing and cooking Bap, and prepared for convenient storage, reposition, transportation, and portability.

The instant rice of the present application includes a sealed container; and a mushroom rice made from grains and mushrooms contained in the container, wherein the rice in the mushroom rice is included in an amount of of 60 parts by weight to 90 parts by weight based on 100 parts by weight of the contents contained in the container, the mushrooms in the mushroom rice are included in an amount of 10 parts by weight to 30 parts by weight based on 100 parts by weight of the contents contained in the container, and the number of microorganisms in the instant rice is negative within a shelf life.

Although the instant rice of the present application is in the form of instant rice, the instant rice may exhibit excellent quality that embodied the taste, nutritional value, texture, etc. of hot pot rice. The hot pot rice refers to Bap cooked using a pot, and specifically, may be Bap cooked in a pressure rice pot or an iron pot, particularly a stone pot and an iron pot such as a cast iron pot, to embody more improved texture.

The instant rice of the present application may be mushroom rice or a nutritious mushroom rice in the form of an instant rice.

The instant rice may further include raw ingredients generally used when preparing nutritious mushroom rice, in addition to the raw ingredients (grains and mushrooms) listed above.

The grains include rice. The "rice" may be any rice that is commonly used in the preparation of Bap, regardless of its type, and may include at least one selected from the group consisting of white rice, black rice, brown rice, non-glutinous rice, and glutinous rice. For example, the rice may be japonica or indica rice, but is not limited thereto. In addition, the rice may be non-glutinous rice, glutinous rice, or a combination thereof. The starch ingredient of the non-glutinous rice may be amylose and amylopectin, and the starch ingredient of the glutinous rice may be amylopectin. Compared to the non-glutinous rice, the glutinous rice may be more sticky when cooking the rice. In addition, the rice may be used regardless of its degree of polishing, and may be 50% polished rice, 70% polished rice, and/or 90% polished rice, in addition to the white rice and brown rice. The types of rice described above may be appropriately selected depending on the type and characteristics of rice to be finally prepared, and the mixing ratio of each type of rice may also be appropriately selected and used.

The grains are mixed grains other than rice and may further include at least one selected from the group consisting of barley, soybeans, red beans, foxtail millet, wheat, rye, wheat, buckwheat, oats, millet, corn, and sorghum. However, the type of mixed grain is not limited thereto, and any mixed grain that may be commonly used in the preparation of rice may be used, and for example, any mixed grain used for the preparation of multi-grain rice or nutritious rice may be used.

The mushrooms may include at least one selected from the group consisting of king oyster mushroom, shiitake mushroom, oyster mushroom, button mushroom, and enoki mushroom. However, the type of mushroom is not limited thereto, and any edible mushroom may be used without limitation, and for example, any mushroom used in the preparation of mushroom rice may be used.

In addition, the instant rice of the present application may further include at least one selected from the group consisting of beans, mushrooms, root and tuber crops, bulbs, seasoned vegetables, fruits/seeds, meat, fish, and eggs, in addition to the grains and mushrooms. The beans may include at least one selected from the group consisting of white beans, green kernel black beans, black beans, yellow beans, medicinal beans, kidney beans, peas, black azuki beans, mung beans, lentils, horse beans, and red beans, but are not limited thereto, and the beans may include all edible plants classified as the legume family. The bulbs may include at least one selected from the group consisting of lotus root, burdock, carrot, and bellflower root, but are not limited thereto. The root and tuber crops may include at least one selected from the group consisting of sweet potatoes, potatoes, and pork potatoes, but are not limited thereto. The seasoned vegetables may include at least one selected from the group consisting of seasoned aster, seasoned thistle, bracken fern, sedum, groundsel, chives, thunberg onion, butterbur, wild garlic, purslane, and aralia, but are not limited thereto. The fruits/seeds may include at least one selected from the group consisting of jujubes, chestnuts, pine nuts, raisins, and pumpkin seeds, but are not limited thereto. The meats may include lean meat, muscle, fat, or mixtures thereof isolated from at least one animal selected from the group consisting of cattle, horse, sheep, goat, deer, and poultry (chicken, duck, geese, turkey, ostrich, turkey, and pheasant), but are not limited thereto. The fish meat includes meat isolated from marine products, eggs of marine products, or foods processed thereof, and for example, may be raw meat isolated from marine products, paste, fish cake, fish meat sausage, etc., but is not limited thereto. The marine products may be fish (cod, pollack, croaker, mackerel, Spanish mackerel, saury, etc.), squid, octopus, octopus minor, shrimp, crab, clam meat, etc., and the roes of the marine products may be pollack roe, cod roe, flying fish roe, shark roe, etc., but are not limited thereto. The eggs include foods obtained from eggs obtained from animals, such as poultry eggs or egg processed products, and may all include eggs, whole eggs, egg yolk, egg white, etc. Specifically, the eggs may be eggs, duck eggs, quail eggs, goose eggs, ostrich eggs, or processed products thereof, but are not limited thereto.

The raw ingredients (grains, mushroom, etc.) included in the instant rice of the present application are susceptible to microbial contamination because the number of microorganisms contained therein is greater than the number of microorganisms contained in other raw ingredients, or may not be sufficiently sterilized through a conventional sterilization process. Specifically, the raw ingredients may have the number of microorganisms of $10^2$ cfu/ml to $10^8$ cfu/ml in the raw ingredients before sterilization, and for example, the number of microorganisms may be in the range of $10^3$ cfu/ml to $10^7$ cfu/ml, 1,500 cfu/ml to 5,000,000 cfu/ml or 1,800 cfu/ml to 4,500,000 cfu/ml. In addition, the number of microorganisms in the raw ingredients before sterilization may be the number of microorganisms measured before sterilizing a mixture of two or more raw ingredients. The number of microorganisms in the raw ingredient mixture before sterilization may be $10^5$ cfu/ml to $10^8$ cfu/ml, and for example, the number of microorganisms in the raw ingredient mixture before sterilization may be 500,000 cfu/ml to 5,000,000 cfu/ml or 550,000 cfu/ml to 1,200,000 cfu/ml. Accordingly, when considering an effect on the health of people who eat instant rice and a legal acceptable level of the number of microorganisms in instant rice, in order to meet the standard by reducing the number of microorganisms contained in instant rice prepared using the raw ingredients, stricter sterilization may be required than when using other raw ingredients. However, when instant rice is prepared through strict sterilization conditions and sterilization methods, microbial contamination may be controlled, but there is a problem that the quality of instant rice may decrease due to the sterilization process. The present application is an invention intended to solve the problems that occur when preparing instant rice using the raw ingredients, and the instant rice of the present application has an effect of not deteriorating the quality of the instant rice even while exhibiting a sufficient sterilization effect.

The Bap in the mushroom rice or the rice prepared from the grains may be included in an amount of 60 parts by weight to 90 parts by weight based on 100 parts by weight of the contents contained in the container. Specifically, the content of the grains may be in the range consisting of a lower limit selected from 60 parts by weight, 62 parts by weight, 65 parts by weight, 67 parts by weight, 70 parts by weight, 72 parts by weight and 75 parts by weight, and/or an upper limit selected from 90 parts by weight, 98 parts by weight, 95 parts by weight, 93 parts by weight, 90 parts by weight, 88 parts by weight, 85 parts by weight, 83 parts by weight, 80 parts by weight and 78 parts by weight. For example, the content of the grains may be 60 to 90 parts by weight, 65 to 85 parts by weight, 70 to 80 parts by weight, 72 to 78 parts by weight, or 75 to 78 parts by weight, but is not limited thereto.

The mushrooms in the mushroom rice or the mushrooms prepared by cooking the mushrooms may be included in an amount of 10 parts by weight to 30 parts by weight based on 100 parts by weight of the contents contained in the container. Specifically, the content of the mushrooms may be in the range consisting of a lower limit selected from 10 parts by weight, 12 parts by weight, 15 parts by weight, 17 parts by weight, 19 parts by weight and 20 parts by weight, and/or an upper limit selected from 30 parts by weight, 28 parts by weight, 25 parts by weight, 23 parts by weight, 21 parts by weight, and 20 parts by weight. For example, the content of the mushrooms may be 10 to 30 parts by weight, 12 to 28 parts by weight, 15 to 25 parts by weight, 17 to 23 parts by weight, 19 to 21 parts by weight, 19 to 20 parts by weight or 20 to 21 parts by weight, but is not limited thereto. The instant rice of the present application is mushroom rice or nutritious mushroom rice containing mushrooms, and has an effect of promoting sterilization and quality at the same time while containing mushrooms that are difficult to sterilize (mushrooms cooked with mushroom rice) in a relatively high content of 10 to 30 parts by weight.

The non-glutinous rice may be added in an amount of 40 parts by weight to 60 parts by weight based on 100 parts by weight of the contents when preparing the instant food of the present application. Specifically, the content of the non-glutinous rice may be in the range consisting of a lower limit selected from 40 parts by weight, 41 parts by weight, 42 parts by weight, 43 parts by weight, 45 parts by weight, 46 parts by weight, and 47 parts by weight, and/or an upper limit selected from 60 parts by weight, 58 parts by weight. parts, 55 parts by weight, 53 parts by weight, 52 parts by weight, 51 parts by weight, 50 parts by weight, and 49 parts by weight. For example, the content of the non-glutinous rice may be 40 to 60 parts by weight, 42 to 58 parts by weight, 44 to 55 parts by weight, 45 to 53 parts by weight, 46 to 51 parts by weight, 47 to 50 parts by weight, or 47 to 49 parts by weight, but is not limited thereto.

The glutinous rice may be added in an amount of 5 parts by weight to 15 parts by weight based on 100 parts by weight of the contents when preparing the instant rice of the present application. Specifically, the content of the glutinous rice may be in the range consisting of a lower limit selected from 5 parts by weight, 6 parts by weight, 7 parts by weight, 8 parts by weight, 9 parts by weight, 10 parts by weight and 11 parts by weight, and/or an upper limit selected from 15 parts by weight, 14 parts by weight, 13 parts by weight, 12.5 parts by weight and 12 parts by weight. For example, the content of the glutinous rice may be 5 to 15 parts by weight, 7 to 14 parts by weight, 9 to 13 parts by weight, 10 to 12.5 parts by weight, or 11 to 12 parts by weight, but is not limited thereto.

The black rice may be added in a content of 1 part by weight to 7 parts by weight based on 100 parts by weight of the contents when preparing the instant rice of the present application. Specifically, the content of the black rice may be in the range consisting of a lower limit selected from 1 part by weight, 1.5 parts by weight, 2 parts by weight, 2.5 parts by weight, 3 parts by weight, 3.5 parts by weight and 4 parts by weight, and/or an upper limit selected from 7 parts by weight, 6.5 parts by weight, 6 parts by weight, 5.5 parts by weight, 5 parts by weight, 4.5 parts by weight and 4 parts by weight. For example, the content of the black rice may be 1 to 7 parts by weight, 1.5 to 6.5 parts by weight, 2 to 6 parts by weight, 2.5 to 5.5 parts by weight, 3 to 5 parts by weight, 3.5 to 4.5 parts by weight, 4 to 4.5 parts by weight, or 3.5 to 4 parts by weight, but is not limited thereto.

The shiitake mushroom may be added in an amount of 10 parts by weight to 25 parts by weight based on 100 parts by weight of the contents when preparing the instant rice of the present application. Specifically, the content of the shiitake mushroom may be in the range consisting of a lower limit selected from 10 parts by weight, 11 parts by weight, 12 parts by weight, 13 parts by weight, 14 parts by weight, 15 parts by weight, 16 parts by weight and 17 parts by weight, and/or an upper limit selected from 25 parts by weight, 24 parts by weight, 23 parts by weight, 22 parts by weight, 21 parts by weight, 20 parts by weight, 19 parts by weight, 18 parts by weight and 17 parts by weight. For example, the content of the shiitake mushroom may be 10 to 25 parts by weight, 12 to 23 parts by weight, 15 to 20 parts by weight, 16 to 19 parts by weight, 17 to 18 parts by weight, or 16 to 17 parts by weight, but is not limited thereto.

The king oyster mushroom may be added in a content of 10 parts by weight to 25 parts by weight based on 100 parts by weight of the contents when preparing the instant rice of the present application. Specifically, the content of the king oyster mushroom may be in the range consisting of a lower limit selected from 10 parts by weight, 11 parts by weight, 12 parts by weight, 13 parts by weight, 14 parts by weight, 15 parts by weight, 16 parts by weight and 17 parts by weight, and/or an upper limit selected from 25 parts by weight, 24 parts by weight, 23 parts by weight, 22 parts by weight, 21 parts by weight, 20 parts by weight, 19 parts by weight, 18 parts by weight and 17 parts by weight. For example, the content of the king oyster mushroom may be 10 to 25 parts by weight, 12 to 23 parts by weight, 15 to 20 parts by weight, 16 to 19 parts by weight, 17 to 18 parts by weight, or 16 to 17 parts by weight, but is not limited thereto.

The instant rice of the present application may further include water or sauces. The sauces are liquid sauces and may be used without limitation as long as the liquid sauces are liquid sauces to be added to impart characteristics such as taste, shape, and physical properties to be implemented in the instant rice of the present application, and specifically, may contain sugars and/or salts. The liquid sauces may be prepared by mixing liquid raw ingredients and/or powdered raw ingredients at a predetermined ratio, and the liquid raw ingredients may be soy sauce, vegetable/animal raw ingredient concentrate, fruit and vegetable paste, honey, oligosaccharide, starch syrup, etc., but are not limited thereto, and the powdered raw ingredients may be salt, sugar, pepper, red pepper powder, etc., but are not limited thereto. For example, the sauce may include soy sauce, garlic, green onions, sugar, salt, sesame oil, honey, or combinations thereof, and more specifically, the sauces may include a shiitake hot water extract. When the liquid sauces are added in the preparation of instant rice, there is a problem that the quality of the liquid sauces may significantly deteriorate during the process of sterilizing the instant rice using a conventional method. However, although the instant rice of the present application contains the liquid sauces, the quality of the instant rice, including the sauces, is not deteriorated and the number of microorganisms in the instant rice and/or the sauces may be maintained at 0 CFU/ml.

The instant rice may be negative during bacteria growth test for microorganisms within the shelf life, more specifically general bacteria and heat-resistant bacteria. Alternatively, the instant rice may be sterile for microorganisms within the shelf life, more specifically general bacteria and heat-resistant bacteria. Alternatively, the instant rice may have 0 cfu/ml of microorganisms, more specifically general bacteria and heat-resistant bacteria within the shelf life. Accordingly, the instant rice of the present application has an advantage of exhibiting a sufficient sterilization effect without deteriorating the quality of the raw ingredients, water and/or sauces included in the instant rice. In addition, the number of microorganisms in the instant rice may be 0 CFU/ml when measured at 9 months or less after the preparation of instant rice, and specifically, the number of microorganisms measured at 1 month or less, 2 months or less, 3 months or less, 6 months or less, or 9 months or less after the preparation may be 0 CFU/ml.

The chromaticity of king oyster mushroom in the instant rice of the present application measured after heating the instant rice of the present application in a 700 W microwave for 1 minute to 3 minutes, 1 minute 30 seconds to 2 minutes 30 seconds, more specifically 2 minutes may have L value of 50 to 70, a value of 3 to 5, and b value of 15.5 to 16.5. Specifically, the L value may be 50 to 70, 55 to 65, or 59 to 62, the a value may be 3 to 5, 3 to 4.5 or 3.3 to 4, and the b value may be 15.5 to 16.5, 15.7 to 16.3 or 16 to 16.2. As the chromaticity range of king oyster mushroom in the instant rice of the present application corresponds to the range, it is possible to provide an instant rice with a color that better matches the color preference of consumers. In the field of food technology to which the present application pertains, the color of the food corresponds to a factor that plays an important role in consumer's preference and choice along with taste quality. In particular, if the brightness (L value) of the mushroom is too dark due to excessive heating, the color preference of the consumers may be significantly reduced, but the mushrooms included in the instant rice of the present application have a relatively high L value, and thus has a characteristic of less deterioration in color quality due to sterilization.

The king oyster mushroom in the instant rice may be included in the form having a length of 3 cm or more and a thickness of 6.5 mm or more. Specifically, the length of the king oyster mushroom may be 3 cm or more, 3.2 cm or more, 3.5 cm or more, 3.7 cm or more, 4 cm or more, 4.2 cm or more, 4.5 cm or more, 5 cm or more, 3 cm to 10 cm. cm, 3.5 cm to 8 cm, 4 cm to 7 cm, or 5 cm to 6 cm, but is not limited thereto. The thickness of the king oyster mushroom may be 6.5 mm or more, 7 mm or more, 7.4 mm or more, 7.5 mm or more, 7.6 mm or more, 7.7 mm or more, 7.8 mm or more, 7.9 mm or more, 6.5 mm to 8.1 mm, 7 mm to 8 mm, 7.4 mm to 8 mm, or 7.8 mm to 8 mm, but is not limited thereto. More specifically, king oyster mushroom satisfying the range may be included in an amount of 85% or more, 900 or more, 950 or more, 97% or more, or 98% or more of the total number of king oyster mushrooms.

The king oyster mushroom included in the instant rice of the present application, compared to the thickness of the king oyster mushroom in the raw ingredient state before preparing the instant rice, may have 25% or less of a thickness shrinkage of king oyster mushrooms measured after heating the instant rice in a 700 W microwave for 1 minute to 3 minutes, 1 minute 30 seconds to 2 minutes 30 seconds, more specifically 2 minutes. The thickness shrinkage represents a difference between the thickness of king oyster mushrooms of raw ingredients before manufacturing an instant rice and the thickness of king oyster mushrooms after cooking in a microwave after manufacturing an instant rice, as a percentage. Specifically, the thickness shrinkage may be 25% or less, 24% or less, 23% or less, 22% or less, 21% or less, 20% or less, 20% to 25%, 21% to 25%, 22% to 24%, or 23% to 24%.

Specifically, the thickness of king oyster mushrooms may be measured using a physical property analyzer (Tensipresser Analyzer, MyBoy, TAKETOMO Electric Incorporated). More specifically, the thickness may be measured by using a TPA curve obtained after one bite on a sample using a 3 $cm^2$ circular plunger, and setting a distance between the plunger and the sample to 30 mm, and compressing the sample at a speed of 2 mm/sec until reached 5 mm from the bottom.

The moisture content of mushrooms in the mushroom rice may be 70% to 85%. Specifically, the moisture content of mushrooms in the mushroom rice may be 70% to 85%, 72% to 83%, 74% to 83%, or 74.5% to 83%, but is not limited thereto. More specifically, the moisture content of the king oyster mushroom may be 70% to 80%, 74.5% to 75%, or 74.8% to 74.9%, and the moisture content of the shiitake mushroom may be 80% to 85%, 82% to 83%, or 82.5% to 83%, but is not limited thereto.

The king oyster mushroom included in the instant rice of the present application may have one or more of the following physical properties obtained by measuring the king oyster mushroom using a physical property analyzer, after heating the instant rice in a 700 W microwave for 1 minute to 3 minutes and 1 minute 30 seconds to 2 minutes 30 seconds, more specifically for 2 minutes: (i) tissue strength (max stress, $dyn/cm^2$) value of the king oyster mushroom of 160,000 to 220,000; and (ii) area value ($erg/cm^3$) of the king oyster mushroom of 18,000 to 28,000.

The physical properties may be measured using a physical property analyzer (Tensipresser Analyzer, MyBoy, TAKETOMO Electric Incorporated). More specifically, a TPA curve obtained after one bite on the sample using a 3 $cm^2$ circular plunger was used. At this time, the distance between the plunger and the sample was set to 30 mm, and the physical properties may be measured by compressing the sample at a speed of 2 mm/sec until reaching 5 mm from the bottom. Max stress values may be measured as the highest point value of the curve when compressed. In addition, the area may be measured as the cumulative force until reaching the highest point.

Specifically, the king oyster mushroom included in the instant rice of the present application may have one or more of the following physical properties obtained by measuring the king oyster mushroom using a physical property analyzer, after heating the instant rice in a 700 W microwave for 1 minute to 3 minutes and 1 minute 30 seconds to 2 minutes 30 seconds, more specifically for 2 minutes: (i) tissue strength (max stress, $dyn/cm^2$) value of the king oyster mushroom of 160,000 to 220,000; and (ii) area value ($erg/cm^3$) of the king oyster mushroom of 18,000 to 28,000.

More specifically, the tissue strength value may be 160,000 to 220,000, 170,000 to 210,000, or 180,000 to 190,000, but is not limited thereto. In addition, the area value ($erg/cm^3$) of the king oyster mushroom measured using a physical property analyzer in the same manner as described above may be 18,000 to 28,000. Specifically, the area value may be 18,000 to 28,000, 19,000 to 25,000, or 21,000 to 24,000, but is not limited thereto. The king oyster mushrooms included in the instant rice of the present application may have a tissue strength and/or area value in the range to exhibit excellent texture.

The sugar content of the sauces before sterilization may be 0 to 60 brix. Specifically, the sugar content of the liquid sauces may be the sugar content in the range consisting of a lower limit selected from 0, 5, 10, 15, 20, 25 and 30 brix and/or an upper limit selected from 60, 55, 50, 45, 40, 35 and 30 brix. For example, the sugar content may be 0 to 60 brix, 5 to 55 brix, 10 to 50 brix, 15 to 45 brix, 20 to 40 brix, 25 to 35 brix, 30 to 35 brix, or 35 to 40 brix, but is limited thereto.

The viscosity of the sauces before sterilization may be 0 to 2,000 cp. Specifically, the viscosity of the sauces may be the viscosity in the range consisting of a lower limit selected from 0, 10, 100, 200, 300, 400, 500, 600, 700, 800, 900, and 1000 cp and/or an upper limit selected from 2,000, 1,900, 1,800, 1,700, 1,600, 1,500, 1,400, 1,300, 1,200, 1,100, and 1,000 cp. For example, the viscosity may be 0 to 2,000 cp, 100 to 1,900 cp, 200 to 1,800 cp, 300 to 1,700 cp, 400 to 1,600 cp, 500 to 1,500 cp, 600 to 1,400 cp, 700 to 1,300 cp, 800 to 1,200 cp p, 900 to 1,100 cp, 1,000 to 1,100 cp or 900 to 1,000 cp, but is not limited thereto.

When the sauces have the sugar content and/or viscosity in the range, heat transfer may be difficult during the sterilization process, thereby making it difficult to control microorganisms. However, the instant food of the present application may exhibit a sufficient sterilization effect even while maintaining the sugar content and/or viscosity range of the sauces. In addition, although the sterilization effect of viscous liquids is not large by a general liquid sterilization method, the instant rice of the present application has an advantage of exhibiting a sufficient sterilization effect of the viscous sauces as described above.

The sealed container may be prepared by attaching a sterilized lid material, for example, a UV sterilized lid material, to the container, and may further include injecting inert gas into the container before sealing. The attaching of the container may be performed using heat, an adhesive, or pressure, but is not limited thereto. The container and the lid material may be used without limitation in shape, material, size, etc., as long as the container and the lid material may be commonly used in the preparation of instant food, and may be a container and a lid material that are not deformed or damaged even by heating. For example, the lid material may be a lead film, but is not limited thereto. After the sealing process, external foreign substances or microorganisms may not be introduced into the container by a natural method, so that microbial contamination may be controlled, and sterile conditions may not necessarily be maintained in the subsequent steps.

The instant rice of the present application includes: sterilizing grains and mushrooms filled in a container under the condition of a F0 value of 4 or higher; adding sterilized water or sterilized sauces to the sterilized raw ingredients; sealing the container added with the water or sauces; and heating the sealed container at a temperature of 90°C to 125°C for 10 to 25 minutes.

The grains, mushrooms, etc. are the same as the raw ingredients contained in the instant rice, and the following description incorporates the parts described above.

The instant rice of the present application may be prepared by sterilizing the raw ingredients contained in the container under conditions of an F0 value of 4 or higher before sealing the container. In addition, the instant rice may be prepared through the step of adding the sterilized water or sterilized sauces to the sterilized raw ingredients. In addition, the instant rice may be prepared through the step of sealing the container added with the water or sauces. In addition, the instant rice may be prepared through the step of heating the sealed container to a temperature of 90°C to 125°C for 10 minutes to 25 minutes.

The instant rice of the present application may be prepared through the step of liquid-sterilizing the water or sauces by directly spraying steam into the water or sauces.

The liquid-sterilizing may be performed for 6 to 8 minutes by directly spraying the steam at 130°C to 140°C into the water or sauces. Specifically, the steam temperature may be a temperature in the range consisting of a lower limit selected from 130°C, 130.5°C, 131°C, 131.5°C, 132°C, and 132.5°C, and/or an upper limit selected from 140°C, 139°C, 138°C, 137°C, 136°C, 135°C, 134.5°C, 134°C, 133.5°C, 133°C, and 132.5°C. For example, the sterilization may be performed with steam at 130°C to 140°C, 130.5°C to 138°C, 131°C to 136°C, 131.5°C to 135°C, 132°C to 133°C, 132.5°C to 135°C or 130° to 132.5°C, but is not limited thereto. The sterilization of the water or sauce may be performed by spraying and injecting the steam at the temperature directly into the water or sauce to raise the temperature, and then passing the water or sauce through a pipe that maintains heat for 6 to 8 minutes. Specifically, the sterilization time after the steam injection may be 6 minutes to 8 minutes, 6 minutes 30 seconds to 8 minutes, 6 minutes to 7 minutes 30 seconds, 6 minutes 30 seconds to 7 minutes 30 seconds, 7 minutes to 8 minutes, or 6 minutes to 7 minutes.

The liquid-sterilizing of the water or sauces may be performed using a Direct-Steam Injection (DSI) sterilization device. The liquid-sterilizing may be performed by setting the temperature and time conditions of the DSI sterilization device as described above.

In the case of instant rice containing liquid sauces with a predetermined range of viscosity and/or sugar content, a possibility of microbial contamination problems is relatively greater, and there is a possibility that quality deterioration of instant rice and/or sauces may occur when prepared according to a general preparation method of instant rice. However, the instant rice of the present application is prepared through the method, so that there is an advantage that colors that match the consumer's preference may be exhibited or deviations between products during mass production may not occur even while microorganisms may be completely controlled.

In the present application, the term "F value" refers to the time required to kill a specific microbial strain at a specific temperature, which may be calculated through a heat lethal time curve for the microorganism. The F value may be determined according to a Z value and a heating temperature according to a type of microorganism to be sterilized. Among them, "F0 value" may be defined as the F value when a Z value is 18°F or 10°C and the heating temperature is 250°F or 121.1°C. The Z value of 10°C is based on the value when sterilizing a standard microbial strain. The F0 value is a value that may be used as a measure of the level of sterilization in the art. Specifically, the F0 value may be measured by a probe of a sensor, which is a cumulative amount of heat transferred to a sample during the heat treatment time. For example, the F0 value may be measured by inserting the probe of the sensor into a cold point (a point where heat is transferred last within the sample or generally the center of the sample) in the sample and then checking the cumulative amount of heat to be transferred during heating, and may be converted and calculated by setting the amount of heat corresponding to 121.1°C and 1 minute to 'F0 = 1'. The F0 value may be measured by inserting a probe of the sensor into a point where heat is transferred last within the sample or generally the center of the sample and then checking the cumulative amount of heat to be transferred during heating, and may be converted and calculated by setting the amount of heat corresponding to 121.1°C and 1 minute to 'F0 = 1'.

The instant rice of the present application may be prepared through the step of sterilizing the raw ingredients contained in the container under the condition of an F0 value of 4 or higher. At this time, when describing the meaning of sterilization under the condition of 'F0 value = 4' as an example, according to the definition of the F0 value, it means sterilizing standard microorganisms with a Z value of 10°C to a level that may kill the microorganisms when sterilization is performed at a temperature of 121.1°C for 4 minutes. The F0 value may be calculated according to Equation 1 below.

[Equation 1]

$$F_0 = t\,(\text{time}) \times 10^{\dfrac{T(\text{Temperature})-121.1\,^\circ\!\text{C}}{10\,^\circ\!\text{C}}}$$

wherein, the unit of t (time) is minute, and the unit of T (temperature) is °C.

Specifically, the sterilizing step may be performed at an F0 value of 4 or more, 4.5 or more, 5 or more, 6 or more, 7 or more, 8 or more, 10 or more, 20 or more, 30 or more, or 40 or more, but is not limited thereto. When the sterilization is performed under a condition in the range of the F0 value or more, as the instant rice is prepared through the subsequent steps, the level of microorganisms contained in the final instant rice product falls below a standard value to exhibit a sufficient sterilization effect.

The sterilizing step may be performed using at least one method selected from the group consisting of pressurized steam sterilization, vacuum pressurized steam sterilization, and ultra-high temperature sterilization, but is not limited thereto and may be used so long as any sterilization method may satisfy the condition of the F0 value of 4 or more. Specifically, the sterilizing step may be performed using a pressure sterilizer (Shinwha, Japan), a vacuum pressure sterilizer (RIC device, Hisaka, Japan), or an ultra-high pressure sterilizer (Echico, Japan), but is not limited thereto. More specifically, the sterilizing step may be performed by directly applying steam to the raw ingredients, or may be performed using a vacuum pressurized steam sterilization method. The vacuum pressurized steam sterilization may be performed sequentially by vacuum, steam sterilization, reduced pressure, and vacuum cooling, for example, using the vacuum pressurized sterilizer. More specifically, the raw ingredients may be placed in the vacuum pressurized sterilizer, and then subjected subsequently to steam sterilization, reduced pressure, and vacuum cooling after the interior of the vacuum pressurized sterilizer is made in a vacuum state. The raw ingredients may be raw ingredients filled in an unsealed container. The interior of the vacuum pressurized sterilizer is made in the vacuum state before steam sterilization to achieve heat transfer efficiency (rapid heat transfer) and homogeneity during steam sterilization.

The sterilizing step may be performed with steam at 120°C to 140°C for 1 to 10 minutes. Specifically, the steam temperature may be a temperature in the range consisting of a lower limit selected from 120°C, 121°C, 122°C, 123°C, 124°C, 125°C, 126°C, 127°C, 128°C, 129°C, and 130°C, and/or an upper limit selected from 140°C, 139°C, 138°C, 137°C, 136°C, 135°C, 134°C, 133°C, 132°C, 131°C, and 130°C. For example, the sterilizing step may be performed with steam at 120°C to 140°C, 121°C to 139°C, 122°C to 138°C, 123°C to 137°C, 124°C to 136°C, 125°C to 135°C, 126°C to 134°C, 127°C to 133°C, 128°C to 132°C, 129°C to 131°C, 129°C to 130°C or 130°C to 131°C, but is not limited thereto. The sterilization time may be the time in the range of a lower limit selected from 1 minute, 2 minutes, 3 minutes, 4 minutes, 4 minutes and 30 seconds, 5 minutes, 5 minutes and 30 seconds, 6 minutes, 6 minutes and 30 seconds and 7 minutes and/or an upper limit selected from 10 minutes, 9 minutes 30 seconds, 9 minutes, 8 minutes 30 seconds, 8 minutes, 7 minutes 30 seconds, 7 minutes, 6 minutes 30 seconds, and 6 minutes. For example, the sterilization may be performed for 1 minute to 10 minutes, 2 minutes to 9 minutes, 3 minutes to 8 minutes, 4 minutes to 7 minutes, 5 minutes to 6 minutes, 5 minutes 30 seconds to 6 minutes, 5 minutes to 5 minutes 30 seconds, 6 minutes to 10 minutes, 7 to 10 minutes, or 7 minutes to 9 minutes, but is not limited thereto, and the sterilization time may vary within the range depending on the volume of raw ingredients to be sterilized. For example, when preparing the instant rice in a volume suitable for one meal per person, the sterilization time may be 4 to 6 minutes, and when preparing the instant rice in a larger volume than the volume for one meal per person, the sterilization time may be increased to a range of 7 minutes to 10 minutes and is able to be changed appropriately depending on the volume.

In addition, the sterilizing step may be performed by repeatedly contacting the raw ingredients 5 to 10 times with steam at 140°C to 155°C for 3 to 10 seconds. Specifically, the steam temperature may be in the range consisting of a lower limit selected from 140°C, 142°C, 145°C, and 147°C and/or an upper limit selected from 155°C, 153°C, 150°C, and 148°C. For example, the sterilization may be performed with steam at 140°C to 155°C, 142°C to 153°C, 145°C to 150°C, 145°C to 148°C, 147°C to 150°C or 147°C to 148°C, but is not limited thereto. The steam contacting time may be the time consisting of a lower limit selected from 3 seconds, 4 seconds, 5 seconds and 6 seconds and/or an upper limit selected from 10 seconds, 9 seconds, 8 seconds and 7 seconds. For example, the steam contacting time may be 3 seconds to 10 seconds, 4 seconds to 9 seconds, 5 seconds to 8 seconds, 6 seconds to 8 seconds, 5 seconds to 7 seconds, or 6 seconds to 7 seconds, but is not limited thereto. The contacting of the raw ingredients with the steam may be repeated 5 to 10 times, 6 to 9 times, 6 to 8 times, 7 to 9 times, or 7 to 8 times.

The instant rice of the present application may be prepared by further including immersing the raw ingredients in water, before including the raw ingredients in the container. The immersing step may include washing the raw ingredients with water, and for example, the raw ingredients may be immersed for 20 minutes to 80 minutes by adding 200 parts by weight to 300 parts by weight of water with respect to total 100 parts by weight of the washed raw ingredients, but it is not limited thereto. The immersing step may be performed in the same manner as a process of soaking grains in water when generally cooking and preparing rice.

After the immersion step, a step of removing water may be further performed before containing the raw ingredients in the container. As a result of removing the water, before the sterilizing step, 0 to 10 parts by weight of water based on 100 parts by weight of the raw ingredients may be contained together in the container.

The instant rice of the present application is subjected to a step of adding sterilized water or sterilized sauces to the sterilized raw ingredients after the sterilizing step, wherein the amount of sterilized water to be added may be used without limitation as long as the amount is within the range generally used when preparing rice. For example, after water is added, sterilized water may be added so that the amount of water becomes 30 parts by weight to 120 parts by weight based on 100 parts by weight of the raw ingredients, specifically 30 parts by weight to 110 parts by weight, 40 parts by weight to 105 parts by weight, 50 parts by weight to 100 parts by weight, 60 parts by weight to 95 parts by weight, or 70 parts by weight to 90 parts by weight. Considering the amount of water contained in the container as a result of immersing the raw ingredients in water and then removing the water, the amount of water may be appropriately adjusted and added so that the amount of water within the range may be ultimately contained in the container.

The instant rice of the present application may be prepared without a cooking step. Specifically, the instant rice may be prepared without a cooking step after the sterilizing step and before the sealing step. The cooking step generally refers to a process of heating the raw ingredients of rice in the process of preparing rice, and for example, may be a step of heating to 90°C to 120°C. Since the method for preparing the instant rice of the present application does not include a cooking step, there is an effect capable of reducing the number of times of heating the raw ingredients and preventing the quality of the instant rice from being deteriorated by heating. In addition, before sealing the container, since microorganisms may be introduced into the container, sterile conditions need to be observed to prevent microbial contamination, but when the cooking step is not included before the sealing step, there is an advantage that a process that have to comply with sterile conditions may be shortened or the time to be maintained in sterile conditions may be reduced. Accordingly, there is an effect capable of reducing the cost of creating sterile conditions and lowering the possibility of microbial contamination.

The instant rice of the present application may be prepared without applying heat 90°C or more before the sealing step after the sterilization step. Specifically, the heat of 90°C or more, 96°C or more, 97°C or more, 98°C or more, 99°C or more, 100°C or more, 102°C or more, 105°C or more, 110°C or more, 120°C, 90°C to 120°C, 97°C to 117°C, 99°C to 120°C, 100°C to 117°C, 105°C to 115°C, or 115°C to 120°C, but it is not limited thereto. Since the instant rice of the present application is prepared without the step of heating in the temperature range before the sealing step, there is an effect capable of reducing the number of times of heating the raw ingredients and preventing the quality of the instant rice from being deteriorated by heating. In addition, since microorganisms may be introduced into the container before sealing the container, sterile conditions need to be observed to prevent microbial contamination, but when the step of heating in the temperature range is not included before the sealing step, there is an advantage that the time to be maintained in sterile conditions may be reduced. Accordingly, there is an effect capable of reducing the cost of creating sterile conditions and lowering the possibility of microbial contamination.

The meaning of "not applying heat" is a concept of including not only not applying heat in the above temperature range at all, but also temporarily applying heat in the temperature range for a short period of time ultimately to the same level as not applying heat according to common sense in the art. For example, even if the temporary heating is performed, it is included in the scope of the present application so long as no significant sterilization effect occurs or no change in Bap quality occurs. For example, the not applying heat may include applying heat in the above temperature range within 1 second, 2 seconds, 3 seconds, 5 seconds, 10 seconds, or 20 seconds, and may also include applying heat in the above temperature range two times or more for a short period of time.

The instant rice of the present application may be prepared by maintaining the temperature of 89°C or less before the sealing step after the sterilization step. Specifically, the temperature may be maintained at 89°C or lower, 88°C or lower, 87°C or lower, 85°C or lower, 80°C or lower, 75°C or lower, 70°C or lower, 10°C to 89°C, 15°C to 88°C, 20°C to 85°C, 25°C to 80°C, 20°C to 70°C, 20°C to 60°C or 20°C to 50°C, but is not limited thereto. In the instant rice of the present application, as the temperature in the range is maintained before the sealing step, there is an effect capable of reducing the number of times of heating the raw ingredients and preventing the quality of the instant rice from being deteriorated by heating. In addition, before sealing the container, since microorganisms may be introduced into the container, sterile conditions need to be observed to prevent microbial contamination, but when the temperature in the range is maintained before the sealing step, there is an advantage that the time to be maintained in sterile conditions may be reduced. Accordingly, there is an effect capable of reducing the cost of creating sterile conditions and lowering the possibility of microbial contamination.

The meaning of "maintaining the temperature" is a concept including not only the case where the temperature in the above range is continuously maintained without interruption in time, but also the case where a temperature condition higher than the above temperature range is temporarily given for a short period of time, that is, the concept including the cases where the above temperatures are continuously maintained, and are ultimately the same under the technical common sense in the art. For example, even if the temperature condition higher than the above temperature range is temporarily given, it is included in the scope of the present application so long as no significant sterilization effect occurs or no change in the quality of Bap occurs. For example, the temperature condition higher than the above temperature range may be given for the time within 1 second, within 2 seconds, within 3 seconds, within 5 seconds, within 10 seconds, or within 20 seconds, and the temperature condition higher than the above temperature range may be given two times or more for a short period of time.

In the instant rice of the present application, the steps from the sterilizing step to the sealing step may be performed while maintaining sterile conditions. Since the container contained with sterilized raw ingredients and the like may be contaminated from external biological particles such as microorganisms and other non-living particles before sealing, there is a need to perform each process under controlled conditions of the contaminant particles floating in the air. The method of maintaining the sterile conditions may be applied without limitation as long as it is a method and condition commonly applied to the production of foods in the art, and specifically, the sterile conditions commonly applied to the preparation of processed foods, instant foods, retort foods, etc. may be applied. The sterile conditions may be maintained by performing each step in a clean room or clean booth, and for example, the process from the completion of the sterilization step to the start of the sealing step may be performed in a tunnel-shaped booth. In this case, the inflow of microorganisms may be prevented through clean air generated from a clean air generator (for example, a HEPA filter) installed in the booth, and the inside of the booth may be maintained at positive pressure.

The instant rice of the present application may be prepared by heating the sealed container to a temperature of 90°C to 125°C for 10 minutes to 25 minutes. Specifically, the heating temperature may be a temperature in the range consisting of a lower limit selected from 90°C, 91°C, 92°C, 93°C, 94°C, 95°C, 96°C, 97°C, 98°C, 99°C, 100°C, 105°C, 107°C, 110°C, 112°C and 115°C and/or an upper limit selected from 125°C, 124°C, 123°C, 122°C, 121°C, 120°C, 119°C, 118°C, 117°C, 116°C and 115°C. For example, the heating may be performed at a temperature of 90°C to 125°C, 91°C to 125°C, 92°C to 124°C, 93°C to 124°C, 94°C to 123°C, 95°C to 123°C, 95° C to 122°C, 95°C to 121°C, 96°C to 121°C, 97°C to 121°C, 100°C to 120°C, 105°C to 119°C, 107°C to 118°C, 110°C to 115°C, 110°C to 118°C, 110°C to 116°C, or 112°C to 116°C, but is not limited thereto. The sterilization time may be a time in the range consisting of a lower limit selected from 10 minutes, 11 minutes, 12 minutes, 13 minutes, 14 minutes, 15 minutes, 16 minutes, 17 minutes, 18 minutes, 19 minutes and 20 minutes, and/or an upper limit selected from 25 minutes, 24 minutes, 23 minutes, 22 minutes, 21 minutes, and 20 minutes. For example, the heating may be performed for 10 minutes to 25 minutes, 11 minutes to 24 minutes, 12 minutes to 23 minutes, 15 minutes to 22 minutes, 17 minutes to 21 minutes, 19 minutes to 20 minutes, 20 minutes to 21 minutes, 12 minutes to 17 minutes, 13 minutes to 16 minutes, 18 minutes to 23 minutes, 19 minutes to 22 minutes, or 19 minutes to 21 minutes, but is not limited thereto. The temperature range and the time range may vary depending on the types of raw ingredients.

When the heating is performed according to the temperature range and the time, there is an advantage of enabling more complete microbial control by exhibiting additional sterilization effects. In addition, through the heating process under the conditions, the instant rice of the present application reaches a level similar to that of rice prepared through the preparing process of conventional rice to have the rice quality suitable for eating, and prevent the deterioration of the rice quality according to an excessive heating condition, thereby preparing instant rice with excellent quality.

The number of microorganisms in the raw ingredients measured after the heating step may be 0 cfu/ml. In the raw ingredients included in the instant rice prepared by the method for preparing the instant rice of the present application, all general bacteria and heat-resistant bacteria are killed, so that the number of microorganisms may be 0 cfu/ml. Accordingly, the instant rice of the present application has an advantage of exhibiting a sufficient sterilization effect without deteriorating the quality of the raw ingredients included in the instant rice.

In other words, the instant rice of the present application may be easy to be cooked and stored as instant food, and may have texture and taste qualities similar to rice prepared through a general rice recipe at home or in a restaurant. In addition, even if raw ingredients that are vulnerable to microbial contamination or not easy to be sterilized are used, it is possible to prepare instant rice in which the number of microorganisms may be controlled through sufficient sterilization and the rice quality does not deteriorate due to sterilization.

The temperature conditions of the heating step may be lower than the heating temperature for conventional retort sterilization, and specifically, may be lower than a retort sterilization heating temperature commonly used in preparing conventional instant rice. In addition, the temperature conditions of the heating step may be higher than the heating temperature during 'steaming', which is performed to transfer heat to the inside of the food in the general cooking process of rice.

The heating step may be performed in a general retort apparatus by setting the temperature and time conditions within the range, but is not limited thereto.

The instant rice of the present application may be prepared by further including a step of cooling and drying after the heating step, and prepared by further including inspecting the appearance and condition of the prepared instant rice and/or packaging one or more instant rice. The cooling step may be cooling by natural wind, but is not limited thereto, and the inspecting step may be visual inspection or sampling inspection, but is not limited thereto.

[Advantageous Effects]

An instant rice according to the present application allows the rice quality and mushroom quality (chromaticity, moisture content, texture, thickness, etc.) not to be damaged by sterilization while lowering the number of microorganism to a threshold value or less through sufficient sterilization, even if instant rice is prepared using raw ingredients that are vulnerable to microbial contamination and difficult to sterilize, and the problem of reduced quality not be occurred by strict sterilization, so that it is possible to provide instant rice having superior quality with taste, nutrition, texture, etc. of hot pot rice.

In addition, the instant rice according to the present application, compared to a general method for the preparation of instant rice, has advantages in terms of cost and microbial safety by using a new preparing principle to minimize changes in quality by reducing the number of heating times, and to simplify the time or steps to be performed by maintaining sterile conditions.

However, the effects of the present application are not limited to the effects described above, and other effects not described will be clearly understood by those skilled in the art from the following description.

[Description of Drawings]

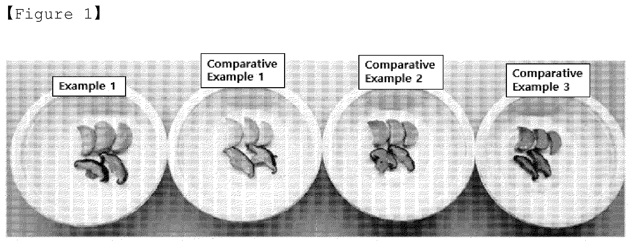

FIG. 1 is a diagram of comparing appearances of king oyster mushrooms in nutritious mushroom rice (Example 1) of the present application and nutritious mushroom rice of Comparative Examples 1 to 3, wherein it can be confirmed that the king oyster mushroom of Example 1 has a relatively bright color.

[Best Mode]

Hereinafter, the present application will be described in detail by Examples. However, the following Examples specifically illustrate the present application, and the content of the present application is not limited by the following Examples.

**<Examples and Comparative Examples>**

**Example 1: Nutritious rice mixed with mushroom rice**

Nutritious rice mixed with mushroom of Example 1 was prepared using grains and various mushrooms as raw ingredients. Specifically, non-glutinous rice, glutinous rice, black rice, shiitake mushroom, and king oyster mushroom were used as the raw ingredients, and corn oil was added to the raw ingredients washed with water to be filled into the container.

The mixing ratio of each raw ingredient was listed in Table 1 below. The filled container was moved to an RIC device (manufactured by Hisaka Seisakusho company), and a steam pressure sterilization was performed at a temperature of 130°C for 5 minute and 30 seconds in a vacuum state. The sterilization condition corresponds to a sterilization condition in which an F0 value was 4 or more.

[Table 1]

| Raw ingredients | Mixing ratio (%) |
| --- | --- |
| Non-glutinous rice | 47.6 |
| Glutinous rice | 11.9 |
| Black rice | 3.9 |
| Shiitake mushroom | 17.5 |
| King oyster mushroom | 17.5 |
| Corn oil | 1.6 |
| Total | 100.00 |

Then, sterilized shiitake hot water extract, refined salt, and water were added to the raw ingredients sterilized with RIC. At this time, the shiitake hot water extract, the refined salt, and the water were sterilized using a conventional heat sterilization method. Thereafter, the container was sealed with a lid material to prevent external microorganisms or foreign substances from being introduced into the container. The sealed container was moved to a retort sterilization device and heated by setting conditions of a temperature of 115°C for 20 minutes to prepare instant rice of Example 1. The temperature and time conditions of the device corresponded to relatively less strict conditions compared to conventional retort sterilization conditions.

**Comparative Examples 1 to 3: Nutritious mushroom rice**

Mushroom nutritious rice of Comparative Examples 1 to 3 was prepared using raw ingredients mixed in the mixing ratio according to Table 1 above. The instant rice was prepared in the same manner as the method for preparing the nutritious rice mixed with mushrooms of Example 3, except that some conditions were varied.

The instant rice of Comparative Example 1 was completed by performing the same method as in Example 1 until the container sealing step, except as prepared by steaming the sealed container at a temperature of 95°C or lower, specifically, heating at a temperature of 85°C for 20 minutes, instead of the heating step of Example 1.

The instant rice of Comparative Example 2 was prepared under the conventional retort heat sterilization conditions by performing the same method as in Example 1 until the container sealing step, except as prepared by heating the sealed container in a retort sterilization device at a temperature of 123°C for 18 minutes, instead of the heating step of Example 1.

In Comparative Example 3, after performing a steam pressure sterilization at 130°C for 5 minute and 30 seconds in the same manner as in Example 1, a cooking process was further performed by adding and heating sterilized water to a temperature of 98°C for 35 minutes again. This corresponds to a process performed in a conventionally known instant rice preparing process. After the cooking step, the instant rice of Comparative Examples 3 was prepared through the same heating step as in Example 1 by sealing and heating the container in a retort sterilization device at 115°C for 20 minutes.

**[Experimental Example 1]**

**[1-1] Comparison of chromaticity and appearance of nutritious rice mixed with mushrooms**

The instant rice (nutritious rice mixed with mushrooms) of Example 1 and Comparative Examples 1 to 3 prepared with mushrooms such as king oyster mushroom and shiitake mushroom as raw ingredients was heated for 2 minutes using a microwave (700 W), and then the lid material was removed, and the colors of the king oyster mushroom were measured, and the appearances were compared. For the colors, L, a, and b values were measured using an instrument manufactured by Konica Minolta company, and each value was measured three times, and average values thereof were shown in Table 2 below.

[Table 2]

| | L | a | b |
| --- | --- | --- | --- |
| Example 1 | 59.60 | 3.39 | 16.08 |

12

(continued)

| | L | a | b |
|---|---|---|---|
| Comparative Example 1 | 59.83 | 2.73 | 14.97 |
| Comparative Example 2 | 46.35 | 5.38 | 15.12 |
| Comparative Example 3 | 46.95 | 5.84 | 16.68 |

As a result, as can be seen in Table 2 above, the color of the king oyster mushroom contained in the instant rice of Example 1 of the present application was measured to have L value higher than the king oyster mushrooms in the instant rice of Comparative Examples 2 and 3. In the case of the method of Comparative Examples 2 and 3, as high-temperature heating process is involved, the color of the mushrooms became excessively dark, but in the instant rice of Example 1 prepared according to the method of the present application, it was confirmed that the colors of king oyster mushrooms remain bright even after heating. It was confirmed that such a color change was shown identically even in the results of visually observing the appearance of the mushroom, and the king oyster mushrooms of Comparative Examples 2 and 3 showed excessively dark colors (FIG. 2).

**[1-2] Analysis of cooked rice taste of nutritious rice mixed with mushrooms**

With respect to instant rice (mushroom nutritious rice) of Example 1 and Comparative Examples 1 to 3 heated using a microwave, a cooked grain taste value of each grain of Bap was measured in the appearance, hardness, glutinousness, balance, and palatability of the rice grains using a taste meter (Tensipresser My Boy 2 system, Taketomo Electric Co., Japan), and the result is shown in Table 3 below.

[Table 3]

| | Appearance | Hardness | Glutinousness | Balance | Palatability |
|---|---|---|---|---|---|
| Example 1 | 3.8 | 9.88 | 4.9 | 2.3 | 45 |
| Comparative Example 1 | 1.5 | 9.8 | 3.5 | 0.2 | 31 |
| Comparative Example 2 | 2.9 | 9.8 | 4.4 | 1.4 | 39 |
| Comparative Example 3 | 3.5 | 9.8 | 5.7 | 1.9 | 43 |

As a result, the instant rice of Example 1 prepared through the preparing method of the present application was measured to have the highest values in the appearance, hardness, and balance values compared to the instant rice of the Comparative Examples prepared through other methods, and also measured to have the glutinousness higher than the mushroom nutritious rice of Comparative Examples 1 and 2, so it was confirmed that it has the highest palatability value.

**[1-3] Analysis of physical properties of nutritious rice mixed with mushrooms**

With respect to the instant rice (mushroom nutritious rice) of Example 1 and Comparative Examples 1 to 3 heated using a microwave, the texture strength (max stress), area and thickness of the king oyster mushroom were measured using a physical property analyzer (Tensipresser Analyzer, MyBoy, TAKETOMO Electric Incorporated), and the result is shown in Table 4 below. Specifically, a TPA curve obtained after one bite one time on the sample using a 3 cm$^2$ circular plunger was used. In this case, the distance between the plunger and the sample was set to 30 mm, and the sample was measured by compression at a speed of 2 mm/sec until reaching 5 mm from the bottom. The max stress value was measured as the highest point of the curve when compressed, which means the hardness of a general sample. In addition, the area was measured as the cumulative force until reaching the highest point.

[Table 4]

| | Max stress (dyn/cm2) | Area (erg/cm3) | Initial thickness (mm) | Thickness (mm) |
|---|---|---|---|---|
| Example 1 | 181250 | 22975 | 10 | 7.90275 |

(continued)

|  | Max stress (dyn/cm2) | Area (erg/cm3) | Initial thickness (mm) | Thickness (mm) |
|---|---|---|---|---|
| Comparative Example 1 | 229500 | 30000 | 10 | 8.18375 |
| Comparative Example 2 | 154000 | 16175 | 10 | 7.34575 |
| Comparative Example 3 | 122075 | 15945 | 10 | 7.63775 |

As a result, as can be seen in Table 4 above, the king oyster mushroom included in the instant rice of Example 1 was measured to have the highest thickness compared to the mushrooms of Comparative Examples 2 and 3, and it was confirmed that less shrinkage occurred in the mushroom. In the case of Comparative Example 1, it is expected that the applied heat is small, and thus the thickness is maintained relatively better. Even in the max stress value indicating texture strength, it was confirmed that the value of king oyster mushroom included in the instant rice of Example 1 was shown to be the highest, except for Comparative Example 1, but the texture of the king oyster mushroom was maintained better than in Comparative Examples 2 and 3 applied with more heat.

**[1-4] Sensory evaluation of nutritious rice mixed with mushrooms**

The instant rice (mushroom nutritious rice) of Example 1 and Comparative Examples 1 to 3 was heated using a microwave, and then various kinds of sensory qualities were evaluated by trained professional panels. The sensory quality was evaluated by color preference, taste/flavor strength, overall taste preference, texture preference, and glutinousness preference of the instant rice, and the result is shown in Table 5 below.

[Evaluation criteria]

Color preference: Provided that 1 point is a minimum value and 5 points are a maximum value, the higher the color preference, the higher the score.
Taste/flavor strength: Provided that 1 point is a minimum value and 5 points are a maximum value, it means that the higher the taste/flavor strength, the higher the score.
Overall taste preference: As it is an item to evaluate the overall taste, provided that 1 point is a minimum value and 5 points are a maximum value, it means that the better the overall taste preference, the higher the score.
Texture preference: Provided that 1 point is a minimum value and 5 points are a maximum value, it means that the higher the texture preference, the higher the score.
Glutinousness preference: Provided that 1 point is a minimum value and 5 points are a maximum value, it means that the higher the glutinousness preference, the higher the score.

[Table 5]

|  | Mushroom color preference | Taste/flavor strength | Overall taste preference | Mushroom texture preference | Glutinousness preference |
|---|---|---|---|---|---|
| Example 1 | 4.3 | 1.0 | 4.1 | 4.5 | 4.3 |
| Comparative Example 1 | 4.8 | 1.0 | 3.8 | 4.5 | 3.6 |
| Comparative Example 2 | 3.2 | 1.3 | 3.6 | 3.6 | 4.0 |
| Comparative Example 3 | 2.4 | 1.1 | 3.5 | 3.3 | 4.0 |

As a result, when compared to the mushroom nutritious rice of the Comparative Examples, the nutritious rice mixed with mushrooms of Example 1 was measured to have the highest preferences in the texture preference, overall taste preference, and glutinousness preference, and was evaluated to be generally high even in the color preference. The taste/favor strength was evaluated as the lowest in the nutritious rice mixed with mushrooms of Example 1. Accordingly, it was confirmed that the nutritious rice mixed with mushrooms of Example 1 prepared according to the preparing method of the present application exhibited superior sensory quality to rice prepared through other methods.

**[Experimental Example 2]**

**Confirmation of the number of microorganisms in nutritious rice mixed with mushrooms**

In order to confirm whether a complete sterilization was performed in the nutritious rice mixed with mushroom product, the number of microorganisms contained in the raw ingredients or product was measured at each step.

With respect to the nutritious rice mixed with mushrooms according to Example 1, first, the number of general bacteria and the number of heat-resistant bacteria for each of the raw ingredients were measured. The number of each bacterium was measured in non-glutinous rice, glutinous rice, chestnuts, pumpkin seeds, raisins and pine nuts, and the number of microorganisms was measured in a mixed solid material sample mixed with the raw ingredients.

As a result, it was measured that general bacteria were present above a certain level in the raw ingredients before going through the sterilization step, and at least 550,000 cfu/ml of general bacteria were present in the mixed solid material of the raw ingredients for preparing the instant rice.

After the raw ingredients were contained in the container, a steam pressure sterilization was performed at a temperature of 130°C for 5 minutes and 30 seconds in an RIC device during the process of preparing the nutritious rice mixed with mushrooms of Example 2, and then a sterilizing effect was confirmed through a microbiology challenge test (MCT). The MCT is a method of determining whether a product has process and distribution stability by artificially inoculating microorganisms and observing changes in order to check whether to control target bacteria during the actual process of the product. As general bacteria, an orange capsule (MesaLabs SASU-302) containing $10^6$ CFU/ml of Bacillus subtilis (ATCC 5230) which died under F0 condition of about 4 or less, was used, and as heat-resistant bacteria, a purple capsule (MesaLabs SA-608) containing $10^6$ CFU/ml of Geobacillus stearotrhermophilus (ATCC 7953) which died at an F0 of about 21 or less, was used. The raw ingredients sterilized with the RIC device using the capsules were cultured for up to 48 hours at a temperature of 35°C for the orange capsule and 55 to 60°C for the purple capsule, respectively, and then color changes were confirmed. If there was no color change, it is determined to be negative, and if the color was changed to yellow, it was determined to be positive (Table 6).

As a result, it was confirmed that all microorganisms that existed in the raw ingredients before sterilization were killed as a result of a steam pressure sterilization using the RIC device, showing a sufficient sterilization effect.

[Table 6]

| Measuring sample | Sample name | MCT |
|---|---|---|
| RIC sterilized sample 1 | 4-carriage 1-stage 35°C | Negative |
| RIC sterilized sample 2 | 4-carriage 1-stage 55°C | Negative |
| RIC sterilized sample 3 | 4-carriage 7-stage 35°C | Negative |
| RIC sterilized sample 4 | 4-carriage 7-stage 55°C | Negative |
| RIC sterilized sample 5 | 4-carriage 12-stage 35°C | Negative |
| RIC sterilized sample 6 | 4-carriage 12-stage 55°C | Negative |

Furthermore, after the steam pressure sterilization, a finished instant rice product was prepared through water addition, sealing and additional heating processes, and bacterial growth experiments were conducted on the finished product. In the bacterial growth experiments, the instant rice product was stored at 35°C for 10 days, and then sampled to determine the growth of general bacteria and heat-resistant bacteria according to a common measurement method in the art (based on the bacterial growth experiments according to the general test method of the Ministry of Food and Drug Safety), each finished product sample was preserved in an incubator at a temperature of 35 to 37°C for at least 10 days, and then a specimen obtained from the sample was homogenized with a diluent and cultured in a culture medium at 35 to 37°C for 45 to 51 hours, and then bacterial growth was measured. As a result, as shown in Table 7 below, since no bacterial growth was observed in all 12 instant rice samples, which were shown as negative, despite the presence of a large amount of microorganisms in the raw ingredients, it was confirmed that all microorganisms were killed in the instant rice prepared through the preparing method of the present application through sufficient sterilization.

[Table 7]

| Measuring sample | Sample name (carriage-stage-number) | Bacterial growth |
|---|---|---|
| Finished product sample 1 | 3-2-1 | Negative |
| Finished product sample 2 | 3-2-1 | Negative |

(continued)

| Measuring sample | Sample name (carriage-stage-number) | Bacterial growth |
| --- | --- | --- |
| Finished product sample 3 | 3-2-1 | Negative |
| Finished product sample 4 | 3-2-7 | Negative |
| Finished product sample 5 | 3-2-7 | Negative |
| Finished product sample 6 | 3-2-7 | Negative |
| Finished product sample 7 | 3-2-14 | Negative |
| Finished product sample 8 | 3-2-14 | Negative |
| Finished product sample 9 | 3-2-14 | Negative |
| Finished product sample 10 | 3-3-1 | Negative |
| Finished product sample 11 | 3-3-1 | Negative |
| Finished product sample 12 | 3-3-1 | Negative |

Hereinabove, representative Examples of the present application have been exemplarily described, but the scope of the present application is not limited to the specific Examples as described above, and can be changed appropriately by those of ordinary skill in the art within the scope described in the appended claims of the present application.

## Claims

1.  An instant rice, comprising:

    a sealed container; and
    a mushroom rice made from grains and mushrooms contained in the container,
    wherein the rice in the mushroom rice is included in an amount of 60 parts by weight to 90 parts by weight based on 100 parts by weight of contents contained in the container,
    mushrooms in the mushroom rice are included in an amount of 10 parts by weight to 30 parts by weight based on 100 parts by weight of the contents contained in the container, and
    the number of microorganisms in the instant rice is negative within a shelf life.

2.  The instant rice of claim 1, wherein the grains comprise rice, and the rice includes at least one selected from the group consisting of white rice, black rice, brown rice, non-glutinous rice, and glutinous rice.

3.  The instant rice of claim 2, wherein the grains are mixed grains other than rice, and further comprise at least one selected from the group consisting of barley, soybeans, red beans, foxtail millet, wheat, rye, bran, buckwheat, oats, millet, corn, and sorghum.

4.  The instant rice of claim 2, wherein the grains comprise at least one selected from the group consisting of white rice and black rice.

5.   The instant rice of claim 2, wherein the grains comprise at least one selected from the group consisting of non-glutinous rice and glutinous rice.

6.  The instant rice of claim 1, wherein the mushrooms comprise at least one selected from the group consisting of king oyster mushroom, shiitake mushroom, oyster mushroom, button mushroom, and enoki mushroom.

7.  The instant rice of claim 6, wherein the chromaticity of the king oyster mushroom has L value of 50 to 70, a value of 3 to 5, and b value of 15.5 to 16.5.

8.  The instant rice of claim 6, wherein the king oyster mushroom is comprised in the form having a length of 3 cm or more and a thickness of 6.5 mm or more.

9. The instant rice of claim 6, wherein the king oyster mushroom, compared to the thickness of the king oyster mushroom in raw ingredients before preparing, has 25% or less of a thickness shrinkage of the king oyster mushroom measured after heating in a 700 W microwave for 2 minutes.

10. The instant rice of claim 1, wherein the moisture content of mushrooms in the mushroom rice is 70% to 85%.

11. The instant rice of claim 6, wherein the king oyster mushroom has at least one of the following physical properties obtained by measuring the king oyster mushroom using a physical property analyzer, after heating the instant rice in a 700 W microwave for 2 minutes:

   (i) tissue strength (max stress, $dyn/cm^2$) value of 160,000 to 220,000; and
   (ii) area value ($erg/cm^3$) of 18,000 to 28,000.

12. The instant rice of claim 1, further comprising:
   sauces, wherein the sauces comprise a shiitake hot water extract.

13. The instant rice of claim 1, wherein the instant rice is prepared by sterilizing the grains and mushrooms contained in the container under the conditions of an F0 value of 4 or higher before sealing the container.

14. The instant rice of claim 13, wherein the instant rice is prepared by heating the sealed container to a temperature of 90°C to 125°C for 10 minutes to 25 minutes.

15. The instant rice of claim 13, wherein the instant rice is prepared so that heat of 90°C or higher is not applied before sealing of the container after the sterilizing.

【Figure 1】

## INTERNATIONAL SEARCH REPORT

| International application No. |
|---|
| **PCT/KR2022/006124** |

| A. | CLASSIFICATION OF SUBJECT MATTER |
|---|---|

**A23L 7/196**(2016.01)i; **A23L 31/00**(2016.01)i; **A23L 23/00**(2016.01)i; **A23L 3/16**(2006.01)i; **A23L 3/10**(2006.01)i; **A23L 3/02**(2006.01)i; **B65B 55/14**(2006.01)i; **B65B 25/00**(2006.01)i

According to International Patent Classification (IPC) or to both national classification and IPC

| B. | FIELDS SEARCHED |
|---|---|

Minimum documentation searched (classification system followed by classification symbols)

A23L 7/196(2016.01); A23L 1/10(2006.01); A23L 17/20(2016.01); A23L 7/10(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 즉석밥(instant rice), 버섯(mushroom), 소스(sauce), 쌀(rice)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2015-0087556 A (HONG, Sung Pyo) 30 July 2015 (2015-07-30)<br>See claim 1; paragraphs [0020]-[0022] and [0037]; and tables 2-3. | 1-11 |
| Y | | 12-15 |
| Y | KR 10-2020-0071059 A (BYOELBIT FARM CO., LTD.) 18 June 2020 (2020-06-18)<br>See claim 1. | 12 |
| Y | JP 5794299 B2 (SATAKE CORPORATION) 14 October 2015 (2015-10-14)<br>See paragraphs [0015], [0023] and [0041]. | 13-15 |
| A | KR 10-2016-0080963 A (REPUBLIC OF KOREA(MANAGEMENT : RURAL DEVELOPMENT ADMINISTRATION)) 08 July 2016 (2016-07-08)<br>See entire document. | 1-15 |
| A | JP 2019-076001 A (TAIYO KAGAKU CO., LTD.) 23 May 2019 (2019-05-23)<br>See entire document. | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 August 2022** | **19 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2022/006124**

| Patent document cited in search report | | | Publication date (day/month/year) | Patent family member(s) | | | Publication date (day/month/year) |
|---|---|---|---|---|---|---|---|
| KR | 10-2015-0087556 | A | 30 July 2015 | KR | 10-1710660 | B1 | 28 February 2017 |
| KR | 10-2020-0071059 | A | 18 June 2020 | KR | 10-2128881 | B1 | 02 July 2020 |
| JP | 5794299 | B2 | 14 October 2015 | CN | 103547169 | A | 29 January 2014 |
| | | | | ES | 2443865 | A2 | 20 February 2014 |
| | | | | ES | 2443865 | B2 | 27 April 2015 |
| | | | | ES | 2443865 | R1 | 10 March 2014 |
| | | | | KR | 10-1832722 | B1 | 27 February 2018 |
| | | | | KR | 10-2014-0047605 | A | 22 April 2014 |
| | | | | US | 2014-0109774 | A1 | 24 April 2014 |
| | | | | US | 9854825 | B2 | 02 January 2018 |
| | | | | WO | 2012-140700 | A1 | 18 October 2012 |
| KR | 10-2016-0080963 | A | 08 July 2016 | None | | | |
| JP | 2019-076001 | A | 23 May 2019 | None | | | |

Form PCT/ISA/210 (patent family annex) (July 2019)

**EP 4 331 382 A1**